# EUROPEAN PATENT SPECIFICATION

(11) **EP 4 620 707 B1**
(45) Date of publication and mention of the grant of the patent: **02.12.2026**
(21) Application number: 24165457.3
(22) Date of filing: 22.03.2024
(51) Int. Cl.: B60G 11/27

(54) **METHODS FOR MONITORING A VEHICLE AND ASSOCIATED SYSTEM COMPRISING A VEHICLE**
VERFAHREN ZUR ÜBERWACHUNG EINES FAHRZEUGS UND ZUGEHÖRIGES SYSTEM MIT EINEM FAHRZEUG
PROCÉDÉS DE SURVEILLANCE D'UN VÉHICULE ET SYSTÈME ASSOCIÉ COMPRENANT UN VÉHICULE

(43) Date of publication of application: 24.09.2025
(73) Proprietor: Volvo Truck Corporation, 405 08 Göteborg (SE)
(72) Inventor: QUIBRIAC, Yann, 69007 LYON (FR); RIBERO, Raphael, 69390 Millery (FR)
(74) Representative: Lavoix

(56) References cited:
- EP-A1- 4 249 296
- EP-B1- 1 597 555
- WO-A1-2023/048085
- JP-A- 2015 096 370

## Description

### TECHNICAL FIELD

The disclosure relates generally to terrestrial vehicles, such as road and off-road vehicles. In particular aspects, the disclosure relates to a method for monitoring a vehicle and to a system comprising a vehicle monitored by such a method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When a vehicle is manufactured, its design is tested and validated to ensure its safety. In particular, the position of the centre of mass of the vehicle is verified to ensure the vehicle's stability.

However, vehicles, in particular heavy-duty vehicles, such as trucks and construction equipment, are often modified after their manufacturing, for example when new equipment are installed, such as a crane or a tipper. Such modification affect the centre of mass of the vehicle. The centre of mass of the vehicle can also be affected by an uneven loading of the vehicle. If the centre of mass moves too far from the position approved by the vehicle manufacturer, some of the vehicle's components may be subject to accelerated wear and tear and/or the vehicle's stability may be impaired.

Furthermore, it is known to add dedicated sensors to a vehicle, such as weight sensors, to determine the centre of mass of a vehicle. However, dedicated sensors increase the cost of the vehicle and can be hard to add to an existing vehicle.

There is therefore a need for a method allowing easy determination of the centre of mass of the vehicle without increasing its cost.

In addition, these is also a need for a method to monitor a vehicle so as to avoid the risks caused by an inadequate centre of mass.

EP 1597555 and JP 2015 096370 describe methods for estimating the position of a centre of gravity of a vehicle using an air suspension system of the vehicle.

JP 2015 096370 discloses a method for monitoring a vehicle according to the preamble of claim 1 and a system according to the preamble of claim 14.

### SUMMARY

According to a first aspect of the disclosure, the disclosure relates to a method for monitoring a vehicle, the vehicle comprising a control unit and an air suspension system, the air suspension system comprising pressure sensors configured to provide data representative of operating pressures of the air suspension system. The method comprises determining a centre of mass of the vehicle by the control unit on the basis of data provided by the pressure sensors at least once during operation of the vehicle.

The first aspect of the disclosure may seek to allow easy determination of the centre of mass. A technical benefit may include removing the need for dedicated sensors to determine the centre of mass. In particular, using the pressure sensors of the air suspension system to determine the centre of mass is particularly advantageous, as known truck are already equipped with such sensors to monitor the operation of the air suspension system.

The method further comprises verifying, by a computer, if the determined centre of mass meets an acceptance criterion; and triggering an automated action, by the computer, when the determined centre of mass fails to meet the acceptance criterion. A technical benefit may include automatically detecting when the centre of masse is displaced too far from a safe position to avoid the drawbacks caused by an unsafe centre of mass.

The method further comprises: after a vehicle bodybuilder modification of equipment of the vehicle, further calculating, by the computer, the centre of mass of the vehicle, using a computer simulation of the vehicle including the modified equipment; verifying, by the computer, if said calculated centre of mass meets the acceptance criterion; and when said calculated centre of mass fails to meet the acceptance criterion, triggering, by the computer, an automated action. A technical benefit may include obtaining a computer simulation of the vehicle including the modified equipment and allowing a comparison between the centre of mass calculated using this simulation and the centre of mass determined using the data provided by the pressure sensors of the air suspension system.

Optionally in some examples, including in at least one preferred example, the vehicle further comprises a chassis and wheels, the wheels being suspended to the chassis by the air suspension system, and each pressure sensor of the air suspension system is associated with one of the wheels. The data representative of operating pressures of the air suspension system provided by each pressure sensor are data representative of a pressure between the wheel associated to said pressure sensor and the chassis. A technical benefit may include allowing for a precise determination of the centre of mass thanks to the positioning of the pressure sensors.

Optionally in some examples, including in at least one preferred example, the vehicle further comprises a braking system comprising braking pressure sensors configured to provide data representative of braking pressures of the braking system and wherein during the operation of the vehicle, in addition to being determined on the basis of the data provided by the pressure sensors, the determined centre of mass of the vehicle is further determined by the control unit on the basis of data provided by the braking pressure sensors. A technical benefit may include increasing the precision of the determination of the centre of mass with the additional data provided by the braking pressure sensors.

Optionally in some examples, including in at least one preferred example, the control unit periodically determines the centre of mass of the vehicle and the computer periodically verifies if the determined centre of mass meets the acceptance criterion. A technical benefit may include ensuring quick detection of a displacement of the centre of mass.

Optionally in some examples, including in at least one preferred example, the control unit determines the centre of mass of the vehicle and the computer verifies if the determined centre of mass meets the acceptance criterion after a vehicle bodybuilder modification of equipment of the vehicle. A technical benefit may include easily detecting the impact of a vehicle bodybuilder modification of equipment of the vehicle on the centre of mass.

Optionally in some examples, including in at least one preferred example, when the determined centre of mass fails to meet the acceptance criterion, the automated action triggered by the computer comprises providing instructions to the control unit to restrict at least one parameter affecting the driving of the vehicle. A technical benefit may include mitigating the risk of damaging the vehicle caused by an unsafe centre of mass.

Optionally in some examples, including in at least one preferred example, providing instructions to the control unit to restrict at least one parameter affecting the driving of the vehicle comprises providing at least one of the following instruction to the control unit: restricting a maximum speed of the vehicle, restricting a maximum torque of the vehicle, restricting a maximum acceleration of the vehicle, and modifying the operation of an electronic stability program of the vehicle. A technical benefit may include mitigating the risk of loss of stability of the vehicle caused by an unsafe centre of mass.

Optionally in some examples, including in at least one preferred example, when the determined centre of mass fails to meet the acceptance criterion, the automated action triggered by the computer comprises providing instructions to emit an alert to a user of the vehicle. A technical benefit may include allowing the user of the vehicle to be informed of the unsafe centre of mass, thus allowing the user to improve the centre of mass.

Optionally in some examples, including in at least one preferred example, providing instructions to emit an alert to a user of the vehicle comprises at least one of the following actions: providing instructions to inform the user that the obtained centre of mass of the vehicle failed to meet the acceptance criterion, and providing instructions to issue a recommendation to the user to modify the maintenance schedule of the vehicle. A technical benefit of the first action may include allowing the user of the vehicle to be informed of the unsafe centre of mass, thus allowing the user to improve the centre of mass and a technical benefit of the second action may include taking into account the negative effect of the unsafe centre of mass onto the vehicle by modifying the maintenance schedule of the vehicle, to prevent vehicle breakdown.

Optionally in some examples, including in at least one preferred example, verifying, by the computer, if the determined centre of mass meets an acceptance criterion comprises comparing the determined centre of mass with a reference range. A technical benefit may include facilitating the detection of an unsafe centre of mass, with an easy-to-implement comparison.

Optionally in some examples, including in at least one preferred example, the reference range is determined during the conception of the vehicle on the basis of the design of the vehicle. A technical benefit may include obtaining a reference range approved by the original manufacturer of the vehicle, which is reliable and takes into account the equipment and components of the vehicle.

Optionally in some examples, including in at least one preferred example, the method further comprises generating a digital twin of the vehicle, the digital twin being stored in the computer and the reference range being determined by analysing the digital twin of the vehicle. A technical benefit may include obtaining a complete computer simulation of the vehicle, allowing for a precise determination of the reference range.

Optionally in some examples, including in at least one preferred example, the vehicle belongs to a fleet of vehicles, the method further comprises obtaining the centre of mass of each vehicle of the fleet of vehicles and the acceptance criterion is determined on the basis of the centre of mass of each vehicle of the fleet of vehicles. A technical benefit may include detecting when a vehicle of the fleet of vehicles is starting to differ from the others in a reliable manner.

According to a second aspect of the disclosure, the disclosure relates to a system comprising a computer and a vehicle, the vehicle further comprising a control unit and an air suspension system, the air suspension system comprising pressure sensors configured to provide data representative of operating pressures of the air suspension system. The control unit is configured to determine the centre of mass of the vehicle on the basis of data provided by the pressure sensor and the computer is configured to:
- verify if the determined centre of mass meets an acceptance criterion,
- when the determined centre of mass fails to meet the acceptance criterion, trigger an automated action,
- after a vehicle bodybuilder modification of equipment of the vehicle, further calculate the centre of mass of the vehicle, using a computer simulation of the vehicle including the modified equipment;
- verify if said calculated centre of mass meets the acceptance criterion; and
- when said calculated centre of mass fails to meet the acceptance criterion, trigger an automated action.

The second aspect of the disclosure may seek to offer a system in which the reliability of the vehicle is increased, by allowing detection of an unsafe centre of mass of the vehicle. A technical benefit may include improving the lifespan of the vehicle, decreasing its maintenance cost and avoiding breakdowns.

Optionally in some examples, including in at least one preferred example, the vehicle is a heavy-duty vehicle, preferably a truck.

Optionally in some examples, including in at least one preferred example, the system includes the features of the optional examples of the methods described here above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary diagram showing a system according to an example, the system comprising a vehicle.
**FIG. 2** is an exemplary flowchart of a method according to an example for monitoring the vehicle of the system of Figure 1.

### DETAILED DESCRIPTION

The detailed description set forth below provides information and examples of the disclosed technology with sufficient detail to enable those skilled in the art to practice the disclosure.

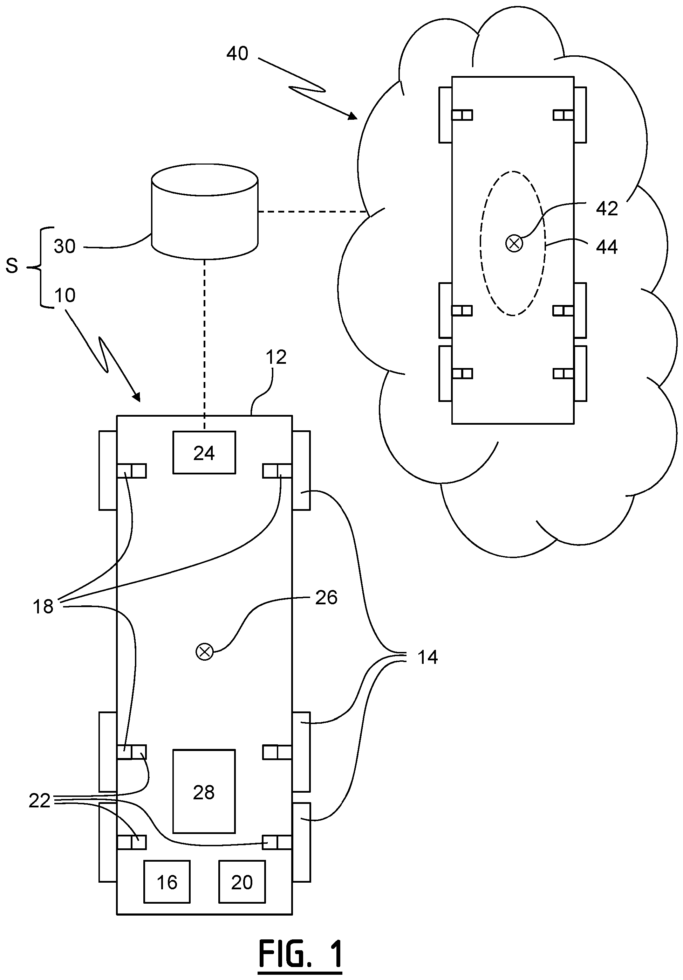

A system S according to an example is shown in the exemplary diagram of Figure 1. The system S comprises a vehicle 10. The vehicle 10 is a land vehicle, more precisely a wheeled or tracked vehicle, such as a road or off-road vehicle. For example, the vehicle 10 is a heavy-duty vehicle, preferably a truck, a bus or a construction equipment.

Preferably, the vehicle 10 is propelled by an internal combustion engine or by an electric motor, not shown.

The vehicle 10 comprises a chassis 12 and wheels 14. In the example, the vehicle 10 comprises six wheels, two of which are connected to a front axle and four of which are connected to two rear axles. According to another example, not shown, the vehicle comprises a different number of wheels, for example four wheels, two of which are connected to a front axle and two of which are connected to a rear axle.

The vehicle 10 comprises an air suspension system 16, with which all the wheels 14 are suspended to the chassis 12. In the example, the air suspension system 16 comprises multiple air suspensions, not shown, each wheel 14 being suspended to the chassis by one of the air suspensions of the air suspension system 16.

Furthermore, the air suspension system 16 is operated to keep the chassis 12 levelled, that is, horizontal, when the vehicle 10 is driven on a horizontal surface. To this end, the pressure of each air suspension is adjusted, in a manner known per se.

The air suspension system 16 comprises pressure sensors 18, in the example six pressure sensors. Each pressure sensor 18 is associated with one of the wheels 14 and is configured to provide data representative of operating pressures of the air suspension system. More precisely, each pressure sensor 18 is configured to provide data representative of a pressure between the wheel associated to said pressure sensor and the chassis 12. In other words, each pressure sensor 18 is configured to measure the pressure within the air suspension through which the associated wheel 14 is suspended to the chassis 12.

Preferably, the vehicle 10 further comprises a braking system 20, allowing for braking force to be applied to each of the wheels 14. The braking system 20 is for example a pneumatic braking system, or air brake system. In the example, the braking system 20 comprises multiple brakes, not shown, each brake being associated to one of the wheels 14 and able to apply a braking pressure to the associated wheel. Preferably, the brakes are disc brakes or drum brakes.

The braking system 20 comprises braking pressure sensors 22, in the example six braking pressure sensors. Each braking pressure sensor 22 is associated with one of the wheels 14 and is configured to provide data representative of braking pressures of the braking system. More precisely, each braking pressure sensor 22 is configured to provide data representative of the braking pressure applied to the wheel 18 associated to said braking pressure sensor by the corresponding brake. Practically speaking, said braking pressure corresponds to the pneumatic pressure applied to the brake.

The vehicle 10 comprises a control unit 24, for example, a dedicated control unit, or the on-board computer of the vehicle 10. In the example, the control unit 24 is configured to control operating parameters of the vehicle 10, such as the operation of the engine or motor of the vehicle and/or of the powertrain of the vehicle.

The control unit 24 is connected to the air suspension system 16 and to the braking system 20 and is configured to collect data provided by the pressure sensors 18 and by the braking pressure sensors 22.

The centre of mass, or barycentre, of the vehicle 10 is referenced 26 and represented by a circled cross in Figure 1. The centre of mass of the vehicle can also be referred to as the centre of gravity of the vehicle, as these two concepts coincide when the vehicle 10 is in a uniform gravitational field.

Practically speaking, the centre of mass 26 is expressed as a three-dimensional position within the vehicle 10: the centre of mass corresponds to a localization along the height, length and width of the vehicle.

The centre of mass 26 of the vehicle 10 is affected by the dimensions of the vehicle, for example by the shape of the chassis 12, the size of the vehicle's powertrain, the number of wheels 14 and the number of axles of the vehicle, and also by the weight of the equipment of the vehicle.

The equipment of the vehicle are represented with a single box 28 in figure 1. Said equipment 28 includes all the parts mounted onto the chassis of the vehicle, by the vehicle manufacturer during its initial manufacturing or by bodybuilder adding components to the vehicle after its manufacturing. In a known manner, vehicle bodybuilder are operators who install customized components on a vehicle's chassis, such as a custom body, a custom cargo area, or various tools such as a crane, a tipper, or special equipment. The equipment 28 add weight to the vehicle 10 and therefore modify its centre of mass 26.

Furthermore, the centre of mass 26 of the vehicle 10 is also affected by the loading of the vehicle, i.e. by the loads carried by the vehicle. In other words, the centre of mass of the vehicle 10 differs depending on whether it is empty or loaded.

The control unit 24 is configured to determine the centre of mass 26 of the vehicle 10 on the basis of data provided by the pressure sensors 18 of the air suspension system 16.

To this end, during operation of the vehicle, the control unit 24 collects the data provided by the pressure sensors 18 and, for example, analyse the pressures between the chassis 12 and each of the wheels 14. Indeed, when the chassis 12 is kept horizontal by the air suspension system 16, the pressure of each suspension depends on the weight applied to the corresponding wheel 14 and thus to the centre of mass 26 of the vehicle 10. For example, if a higher pressure is detected to the front-left wheel compared to the other wheels, it can be concluded that the centre of mass 26 is closer to the front-left wheel. The centre of mass 26 is determined during operation of the vehicle because the air suspension system needs to be in operation for the pressure sensors 18 to provide data to the control unit 24.

For example, the centre of mass is calculated as a function of the data provided by the pressure sensors 18, or is obtained by comparing said data with reference data.

Optionally, the control unit 24 also determines the centre of mass 26 on the basis of data provided by the braking pressure sensors 22 of the braking system 20, in addition to the data provided by the pressure sensors 18 of the air suspension system 16. To this end, during operation of the vehicle, the control unit 24 collects the data provided by the braking pressure sensors 22, and analyse the braking pressures applied to each of the wheels 14. Indeed, the braking pressure applied to one wheel 14 depends on the weight applied to the corresponding wheel 14 and thus to the centre of mass 26 of the vehicle 10. For example, if a higher braking pressure is applied to the front-left wheel compared to the other wheels, it can be concluded that the centre of mass 26 is closer to the front-left wheel.

The system S also comprises a computer 30, which is in communication with the control unit 24. In the example, the computer 30 is a remote computer, such as a server or remote server, and is connected to the control unit 24 by a wireless connection, for example via the Internet using a 4G or 5G connexion. The connection between the control unit 24 and the computer 30 is shown in Figure 1 with a dotted line.

According to another example, the computer 30 is on-board the vehicle 10 and preferably directly connected to the control unit 24 via wires. According to another example, the control unit 24 and the computer 30 are both part of a computer system of the vehicle. According to another example, the control unit 24 is part of the computer 30.

According to a preferred example, as shown in Figure 1, the computer 30 is configured to store a digital twin 40 of the vehicle 10. The digital twin 40 is a digital representation of the vehicle 10, i.e. a digital simulation, or numerical simulation, of the vehicle. Practically speaking, the digital twin 40 comprises all the characteristics of the vehicle 10, such as its shape, weight, all its components and its equipment 28.

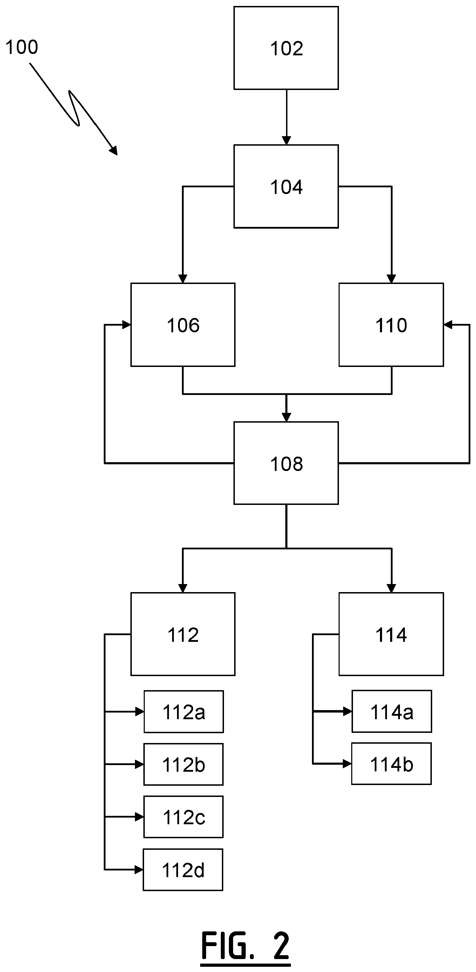

A method 100 for monitoring the vehicle 10 is now described, with reference to Figure 2. The method 100 aims to monitor the centre of mass 26 of the vehicle 10 and to detect a displacement of the centre of mass, to avoid accelerated wear and tear of the vehicle and/or a reduction in the stability of the vehicle, which can affect its driving capabilities.

The method 100 starts with a step 102, during which the digital twin 40 of the vehicle 10 is generated and then stored by the computer 30. Preferably, the generation of the digital twin is performed by the computer 30. Typically, the generation of the digital twin is supervised by the original manufacturer of the vehicle 10 and is performed during the conception of the vehicle. Hence, the digital twin 40 is generally generated before the vehicle 10 is manufactured. For example, the digital twin is generated by Computer-aided design (CAD).

Based on a numerical analysis of the digital twin 40, a digital centre of mass 42 is determined. The digital centre of mass 42 is the centre of mass of the digital twin 40. Furthermore, since the digital twin 40 is generated based on the design of the vehicle 10, then the digital centre of mass 42 of the digital twin 40 is identical to the centre of mass 26 of the vehicle 10. Hence, for a vehicle 10 having a digital twin 40 that faithfully represents the vehicle, determining the centre of mass 26 with the control unit 24 as described here above and determining the digital centre of mass 42 by analysing the digital twin 40 gives the same result.

Then, the method 100 comprises a step 104, during which a reference range 44 is determined in the digital twin 40.

The reference range 44 is a range of positions within the digital twin 40 corresponding to acceptable positions of the digital centre of mass 42 and of the centre of mass 26, since the digital centre of mass 42 of the digital twin 40 is identical to the centre of mass 26 of the vehicle 10. In other words, the reference range 44 corresponds to a safe zone for the centre of mass 26. If the digital centre of mass 42 is located within the reference range, then the centre of mass 26 is considered to be acceptable, that is, the centre of mass 26 is not susceptible to degrade the vehicle or affect its driving capabilities. On the contrary, if the digital centre of mass 42 is located outside of the reference range, then the centre of mass 26 is considered to be unacceptable and susceptible to cause wear and tear and/or a reduction in the stability of the vehicle.

For example, a centre of mass 26 is outside of the reference range 44 can correspond to a centre of mass too far from the centre of the vehicle 10, in the direction of its width, which can provoke instability issues of the vehicle, such as a rollover when the vehicle is driving in a curve, or to a centre of mass located too close to the rear of the vehicle, in the direction of its length, adding more weight to the rear wheels 14 and causing wear and tear in the suspensions and/or brakes of the rear wheels.

The reference range 44 can also be designated as a reference range of centre of masses or as a reference range of safe centre of masses.

In Figure 1, the reference range 44 is represented as a 2D shape outlined with a dotted line, as a simplification. It is to be understood that the reference range 44 is a three-dimensional range, since the centre of mass 26 and the digital centre of mass 42 are expressed as a three dimensional position within the vehicle 10.

The reference range 44 is determined on the basis of the specification of the vehicle, i.e. on the basis of the design of the vehicle.

Preferably, the reference range 44 is determined by analysing the digital twin 40. For example, the digital twin 40 is arbitrarily modified to differ from the vehicle 10 so that multiple digital centre of masses 42 that do not correspond to the centre of mass 26 are simulated and the comportment of the digital twin 40 is tested for each simulated digital centre of mass, to detect which digital centre of masses are safe, forming together the reference range, and which digital centre of mass are unsafe.

Typically, the determination of the reference range 44 is supervised by the original manufacturer of the vehicle 10 and is performed during the conception of the vehicle. Hence, the reference range 44 is generally determined before the vehicle 10 is manufactured.

When the vehicle 10 is manufactured, the vehicle 10 and its digital twin 40 correspond to each other, because the manufacturer of the vehicle 10 possess all the data required to establish a faithful digital twin. However, after the vehicle 10 is sold, the vehicle can be subjected to changes without the manufacturer being informed, so that the digital twin 40 may no longer correspond to the vehicle 10.

Preferably, steps 102 and 104 are performed by the computer 30. Furthermore, steps 102 and 104 are optional.

The method 100 continues after the steps 102 and 104, and after the manufacturing of the vehicle 10, with a step 106, performed by the control unit 24 during operation of the vehicle 10, that is, when the vehicle is driven. During step 106, the centre of mass 26 of the vehicle 10 is determined by the control unit 24 on the basis of data provided by the pressure sensors 18 of the air suspension system 16 and, optionally, on the basis of data provided by the braking pressure sensors 22 of the braking system 20. This determination is performed as explained here above: for example, the centre of mass is calculated as a function of the data provided by the pressure sensors 18, or is obtained by comparing said data with reference data. Thus, the determined centre of mass 26 is representative of the actual centre of mass of the vehicle 10: it takes into account the equipment 28 and the load of the vehicle.

Then, the method 100 comprises a step 108, performed by the computer 30, during which the computer 30 verifies if the determined centre of mass 26 meets an acceptance criterion. In a preferred example, the acceptance criterion is the reference range 44 and the determined centre of mass 26 is compared with the reference range 44.

To this end, in the example, the determined centre of mass 26 is communicated by the control unit 24 to the computer 30 and the digital centre of mass 42 of the digital twin 44 is updated by the computer 30 to be equal to the determined centre of mass 26. Hence, the digital twin is updated to reflect the centre of mass 26 of the vehicle, even when the digital twin is not updated to take into account modification of the equipment 28 and the load of the vehicle. In the example, step 108 is performed by the computer 30.

According to another example, the determined centre of mass 26 is directly compared to the reference range 44, without updating the digital twin 40. Said comparison can be performed by the control unit 24 or by the computer 30. In such an example, the digital twin 40 is therefore used only for determining the reference range 44.

As an alternative, other acceptance criterion can be considered. For example, the determined centre of mass 26 is compared to reference values to determine whether the centre of mass of the vehicle is acceptable or not.

Then, if the determined centre of mass 26 meets the acceptance criterion, i.e., in the example, if the determined centre of mass 26 is within the reference range 44, the steps 106 and 108 are repeated, preferably periodically. In other words, the centre of mass 26 is periodically determined and compared with the reference range 44, as long as the centre of mass stays within the reference range. For example, the steps 106 and 108 are repeated after a predefined period of use of the vehicle 10, for instance 1 minute or 1 hour, or once a day, or after a predefined distance covered by vehicle 10, for instance 1 kilometre.

Optionally, in addition of being periodically repeated, i.e. independently of their periodic repetition, the steps 106 and 108 are also performed after a modification of the equipment 28 of the vehicle 10, in particular by a vehicle bodybuilder. For example, the steps 106 and 108 are performed after a tool, such as a crane or a tipper, is installed to the vehicle 10. Practically speaking, the steps 106 and 108 can be performed right after the manufacturing of the vehicle 10, i.e. right after step 104, and/or during the life of the vehicle in addition of their periodic repetition.

Furthermore, the method 100 also comprises a step 110, which is performed after a modification of the equipment 28 of the vehicle 10 by a vehicle bodybuilder. For example, the step 110 is performed after a tool, such as a crane or a tipper, is installed to the vehicle 10. Practically speaking, the step 110 can be performed right after the manufacturing of the vehicle 10, i.e. right after step 104 and before the first execution of step 106, and/or during the life of the vehicle.

During step 110, the digital twin 40 of the vehicle 10 is updated to take into account the modification of the equipment 18 of the vehicle, so that the digital twin correspond to the vehicle 10. Then, the digital centre of mass 42 is calculated, using the digital twin. In other words, during step 110, the digital centre of mass 42 is calculated by using a computer simulation of the vehicle including the modified equipment, i.e. the digital twin 40. Thanks to the calculation of the digital centre of mass 42, the centre of mass 26 of the vehicle is known, since the digital twin 40 is updated to correspond to the vehicle 10.

Preferably, step 110 is performed by the computed 30 under supervision of the manufacturer of the vehicle 10.

Then, after step 110, step 108 is performed as described here above, the centre of mass 26 determined via the digital twin 40 and the digital centre of mass 42 being verified against the acceptance criterion, that is, in the example, being compared to the reference range 44.

It is to be understood that steps 106 and 110 are two alternatives ways of checking the evolution of the centre of mass 26 of the vehicle 10 after a modification of the equipment 28 of the vehicle: the centre of mass 26 is either determined by the control unit 24 on the basis of the data provided by the pressure sensors 18 and the braking pressure sensors 22, in step 106, or determined by the computer 30 using the digital twin 40, in step 110. The first way, using the sensors of the vehicle, offers the advantage of being easier to implement, because no modification of the digital twin 40 is required. The second way, using the digital twin, offers the advantage of updating the digital twin, so that the manufacturer of the vehicle knows the evolution of the vehicle after its manufacture.

Optionally, after a modification of the equipment 28, both steps 106 and 110 are performed, allowing for a comparison between the centre of mass 26 determined during step 106 and the digital centre of mass 42 determined during step 110, to verify that the two centre of masses match each other, confirming that the digital twin 40 was correctly updated.

Following step 108, if the determined centre of mass 26 does not meet the acceptance criterion, that is, in the example, if the determined centre of mass is outside of the reference range 44, then the method 100 continues with a step 112 and/or a step 114, during which automated actions of the computer 30 are triggered.

The automated actions triggered by the computer 30 during steps 112 and 114 aim to avoid any premature wear and tear or any instability issues with the vehicle 10 that might be caused by the centre of mass 26 of the vehicle being outside of the reference range 44, i.e. being unsafe. In other words, the automated actions of steps 112 and 114 allow to take countermeasures to avoid these problems.

During step 112, the automated actions triggered comprises providing, by the computer 30, instructions to the control unit 24 to restrict at least one parameter the driving of the vehicle 10. Such action aim, in particular, to avoid rollover of the vehicle 10 and excess stress of the components of the vehicle.

For example, in a sub-step 112a of step 112, the computer 30 provides instructions to the control unit 24 to restrict a maximum speed of the vehicle 10. When the control unit 24 executes these instructions, it restrict the maximum speed of the vehicle, for example by limiting the fuel injection if the vehicle is propelled by an internal combustion engine, or by limiting the maximum rotational speed of the electric motor if the vehicle is propelled by an electric motor. Restricting the maximum speed of the vehicle 10 prevent the vehicle to be operated at high-speed, where the risk of rollover of the vehicle is highest.

For example, in a sub-step 112b of step 112, the computer 30 provides instructions to the control unit 24 to restrict a maximum torque of the vehicle 10. When the control unit 24 executes these instructions, it restrict the maximum torque of the vehicle, for example by limiting the fuel injection if the vehicle is propelled by an internal combustion engine, or by limiting the maximum rotational torque of the electric motor if the vehicle is propelled by an electric motor. Restricting the maximum torque of the vehicle 10 reduces the risk of rollover of the vehicle and reduces the load on the components of the vehicle, thus avoiding excessive wear and tear.

For example, in a sub-step 112c of step 112, the computer 30 provides instructions to the control unit 24 to restrict a maximum acceleration of the vehicle 10. When the control unit 24 executes these instructions, it restrict the maximum acceleration of the vehicle, for example by limiting the fuel injection if the vehicle is propelled by an internal combustion engine, or by modifying the control law of the electric motor if the vehicle is propelled by an electric motor. Restricting the maximum acceleration of the vehicle 10 prevent the vehicle to perform dangerous manoeuvres with a risk of rollover of the vehicle and reduces the load on the components of the vehicle, thus avoiding excessive wear and tear.

For example, in a sub-step 112d of step 112, the computer 30 provides instructions to the control unit 24 to modify the operation of an electronic stability program of the vehicle 10. The electronic stability program, or electronic stability control, of the vehicle, aims to improve the stability of the vehicle 10 by detecting and reducing loss of traction. When the electronic stability program detects loss of steering control, it automatically operates the brakes of the vehicle to help steer the vehicle where the driver intends to go. An unsafe centre of mass 26 is more susceptible to provoke loss of stability of the vehicle. Hence, in the example, when the control unit 24 executes these instructions, the operation of the electronic stability program is modified to be more sensitive, that is, to trigger more easily, to better avoid loss of stability of the vehicle.

During step 112, the computer 30 performs one or more of the sub-steps 112a-112d.

Furthermore, the sub-steps 112a-112b are non-limitative examples and, during step 112, other instruction can be provided by the computer 30 to the control unit 24 to restrict parameters affecting the driving of the vehicle.

During step 114, the automated actions comprise providing, by the computer 30, instructions to emit an alert to a user of the vehicle 10. Such action aim to inform the user of the vehicle of the unsafe centre of mass 26 and to help the user avoid the risk of a loss of stability of the vehicle and to avoid, or take into account, the excessive wear and tear of the components of the vehicle.

The user of the vehicle can be the vehicle driver, the vehicle owner, the vehicle manager and/or the vehicle manufacturer.

For example, in a sub-step 114a of step 114, the computer 30 provides instructions to inform the user of the vehicle 10 that the determined centre of mass 26 of the vehicle failed to meet the acceptance criterion, i.e., in the example, is outside of the reference range 44.

As non-limiting examples, said instructions to inform the user may include providing instructions to the control unit 24 to display an alert on a dashboard of the vehicle 10 and/or providing instructions to a management software of the vehicle used by the vehicle manager to display an alert. The alert can take, for example, the form of a written message, an illuminated symbol or an audio signal.

Informing the user that the centre of mass 26 of the vehicle does not meet the acceptance criterion is particularly advantageous to allow the user of the vehicle to correct the centre of mass. For example, if the centre of mass 26 is rendered unsafe due to poor load distribution in the vehicle, the user of the vehicle can improve the load distribution in the vehicle so that the centre of mass 26 returns within the reference range 44. According to another example, if the centre of mass 26 is rendered unsafe due to a poorly positioned equipment 28, the user of the vehicle can modify the equipment 28, for example by repositioning the poorly positioned equipment and/or by adding counterweights to the vehicle, until the centre of mass 26 returns within the reference range 44. Hence, the negative consequences of a centre of mass outside of the reference range are avoided.

For example, in a sub-step 114b of step 114, the computer 30 provides instructions to issue a recommendation to the user of the vehicle to modify the maintenance schedule of the vehicle.

As non-limiting examples, said instructions may include providing instructions to the control unit 24 to display an message on a dashboard of the vehicle 10 informing the driver that the duration between two maintenances should be decreased and/or providing instructions to a management software of the vehicle used by the vehicle manager to display a message suggesting reducing the duration between two maintenances.

Issuing a recommendation to the user to modify the maintenance schedule of the vehicle is particularly advantageous to avoid a failure, or breakdown, of the vehicle that might be provoked by the unsafe centre of mass 26. Indeed, an unsafe centre of mass can increase the wear and tear of components of the vehicle 10 and therefore reduce the lifespan of said components. Hence, failure or breakdown can occur before the expected lifespan of the components. Therefore, is the maintenance schedule of the vehicle is not modified, the vehicle might be immobilized due to unexpected failure or breakdown, and modifying the maintenance schedule, generally by reducing the duration between two maintenance intervention, prevents such unexpected failure or breakdown.

In addition, the maintenance schedule of the vehicle can be modified by being refined based on the location of the centre of mass 26. For example, if the centre of mass is close to a wheel, then the maintenance schedule of the suspension and of the brake associated with said wheel will be modified to take into account the effects of the additional load applied to them.

During step 114, the computer 30 performs one or more of the sub-steps 114a-114b.

Furthermore, the sub-steps 114a-114b are non-limitative examples and, during step 114, other instruction can be provided by the computer 30 to emit an alert to the user of the vehicle.

Preferably, after performing steps 112 and/or 114, the method 100 repeat steps 106 and 108. In other words, even after detecting that the centre of mass 26 is outside of the reference range 44, the method 100 continues to periodically determine the centre of mass and verify if the acceptance criterion is met. Thus, the evolution of the determined centre of mass 26 can be monitored and the source of the unsafe centre of mass 26 can be deduced. Indeed, if the centre of mass 26 determined during step 106 remains the same, i.e. continues to fail to meet the acceptance criterion, then the centre of mass 26 is likely rendered unsafe by an equipment 28 of the vehicle, such that an added crane or tipper. This hypothesis can further be confirmed if the centre of mass 26 fails to meet the acceptance criterion for the first time after a bodybuilder modification of the equipment 28. On the contrary, if the centre of mass 26 determined during step 106 varies between each successive execution of step 106, then the centre of mass 26 is likely rendered unsafe by the vehicle loading, which generally differ between two successive trips of the vehicle.

Furthermore, based on the information collected by repeating steps 106 and 108, and particularly based on the detected source of the unsafe centre of mass 26, the instructions provided by the computer 30 during steps 112 and/or 114 can be adjusted. For example, if the source of the unsafe centre of mass 26 is deduced to be the equipment 28 of the vehicle, then the alert emitted during step 114 will preferably be destined to the owner or the manager of the vehicle, to suggest a modification of the equipment 28. On the contrary, if the source of the unsafe centre of mass 26 is deduced to be the vehicle loading, then the alert emitted during step 114 will preferably be destined to the driver of the vehicle, to inform him of the need to distribute the vehicle loading more evenly.

Thanks to the method 100, the centre of mass 26 of the vehicle 10 can be monitored so that an unsafe centre of mass can be detected and so that measures can be taken to avoid its negative consequences. The fact that the centre of mass 26 is determined on the basis of data provided by the pressure sensors 18 and the braking pressure sensors 22 is particularly advantageous, because these sensors are already used in known trucks, to monitor the operation of the air suspension system 16 and of the braking system 20 respectively. Hence, the implementation of the method 100 does not require adding more sensors to the vehicle 10, allowing the method to be implemented in existing vehicle in a cost-effective manner.

As an alternative, not shown, the method 100 is performed without generating a digital twin of the vehicle, i.e. the method does not comprise step 102. In such an example, the detection criterion, in the example the reference range 44, is determined by other means during step 104. For example, a reference centre of mass is retrieved from a manufacturer datasheet of the vehicle 10, said reference centre of mass being corrected to take into account equipment added after the manufacturing of the vehicle by also retrieving the centre of gravity of said equipment, and the detection criterion is established as a predefined acceptable deviation from said reference centre of mass. The reference centre of mass can be retrieved, for example, wirelessly with a 4G or 5G network and stored by the control unit 24 or by the computer 30.

For example, the detection criterion, preferably the reference range 44, is determined by analysing a fleet of vehicles to which the vehicle 10 belongs. The fleet of vehicle comprises only vehicles which are similar to the vehicle 10: all the vehicle of the fleet have the same size, configuration, weight and equipment. Preferably, the fleet of vehicle comprises several vehicles used for the same purpose, for example several identical delivery vehicles or several identical heavy-duty vehicles used in similar conditions. In such an example, the method comprises obtaining the centre of mass 26 of each vehicle of the fleet of vehicles and choosing the acceptance criterion as a function of the centre of mass of each vehicle of the fleet of vehicles.

For instance, after obtaining the centre of mass 26 of each vehicle of the fleet of vehicles, the average of all the centres of mass is calculated and the reference range 44 is defined as a range of position centred onto said average, with a tolerance around this central point, said tolerance being for example equal to 10% of the standard deviation of the centres of mass. Other ways of obtaining the reference range on the basis of the centres of mass of the vehicles of the fleet and other acceptance criterion can be considered.

Then, steps 110-114 are performed as described here above: if the measured centre of mass 26 is outside of the reference range 44, then steps 112 and 114 are performed. Indeed, in a fleet of similar vehicles, if one of the vehicle has a centre of mass 26 significantly different from the average of the centres of mass of all the vehicles of the fleet, then said vehicles needs to be investigated: either equipment have been added to this vehicle only, or the vehicle is poorly loaded, modifying its centre of mass.

In the preferred example described above, steps 102, 104, 108, 110, 112 and 114 are performed by the computer 30 and the computer is a remote computer. Hence, only the determination of the centre of mass during step 106 is performed by the vehicle 10, more precisely by the control unit 24. Therefore, it is to be understood that, in the preferred example described above, parts of the method 100 are performed by the control unit 24 of the vehicle 10 and parts of the method 100 are performed by the computer 30. Furthermore, it is to be understood that the determination of the centre of mass by the control unit during step 106 is performed independently of the other steps of the method 100, as only the data provided by the pressure sensors 18 is required to perform this determination.

In another example, the computer 30 is on-board the vehicle 10, with the control unit 24 and the computer 30 being both part of a computer system of the vehicle or the control unit 24 being part of the computer 30, so that the method is fully performed by the vehicle. Hence, in such an example, the method 100 can be performed without the use of a remote server. Preferably, in such an example, no digital twin is used and the acceptance criterion is provided to the computer 30 during the vehicle manufacturing.

As an alternative, not shown, the vehicle 10 is a tracked vehicle, running on a continuous tracks. Each continuous track is driven by two or more wheels which are suspended to the chassis of the vehicle by the air suspension system 16 as described here above. In other words, the method 100 is applicable regardless of whether the vehicle 10 is a tracked vehicle or a wheeled vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A method (100) for monitoring a vehicle (10), the vehicle comprising a control unit (24) and an air suspension system (16), the air suspension system comprising pressure sensors (18) configured to provide data representative of operating pressures of the air suspension system,
wherein the method (100) comprises:
- determining (106) a centre of mass (26) of the vehicle (10) by the control unit (24) on the basis of data provided by the pressure sensors (18) at least once during operation of the vehicle,
- verifying (108), by a computer (30), if the determined centre of mass (26) meets an acceptance criterion;
- triggering (112, 114) an automated action, by the computer (30), when the determined centre of mass (26) fails to meet the acceptance criterion,
**characterised in that** the method (100) comprises
- after a vehicle bodybuilder modification of equipment (28) of the vehicle, further calculating (110), by the computer (30), the centre of mass (26) of the vehicle (10), using a computer simulation of the vehicle (10) including the modified equipment (28);
- verifying (108), by the computer (30), if said calculated centre of mass (26) meets the acceptance criterion; and
- when said calculated centre of mass (26) fails to meet the acceptance criterion, triggering (112, 114), by the computer (30), an automated action.

2. The method (100) of claim 1, wherein the vehicle (10) further comprises a chassis (12) and wheels (14), the wheels being suspended to the chassis by the air suspension system (16), wherein each pressure sensor (18) of the air suspension system is associated with one of the wheels and wherein the data representative of operating pressures of the air suspension system provided by each pressure sensor (18) are data representative of a pressure between the wheel associated to said pressure sensor and the chassis.

3. The method (100) of any of claims 1-2, wherein the vehicle (10) further comprises a braking system (20) comprising braking pressure sensors (22) configured to provide data representative of braking pressures of the braking system and wherein during the operation of the vehicle, in addition to being determined on the basis of the data provided by the pressure sensors (18), the determined centre of mass (26) of the vehicle (10) is further determined (106) by the control unit (24) on the basis of data provided by the braking pressure sensors (22).

4. The method (100) of any of claims 1-3, wherein the control unit (24) periodically determines (106) the centre of mass (26) of the vehicle (10) and wherein the computer (30) periodically verifies (108) if the determined centre of mass (26) meets the acceptance criterion.

5. The method (100) of any of claims 1-4, wherein the control unit (24) determines (106) the centre of mass (26) of the vehicle (10) and the computer (30) verifies (108) if the determined centre of mass (26) meets the acceptance criterion after the vehicle bodybuilder modification of equipment (28) of the vehicle.

6. The method (100) of any of claims 1-5, wherein when the determined centre of mass (26) fails to meet the acceptance criterion, the automated action triggered (112, 114) by the computer (30) comprises providing (112) instructions to the control unit (24) to restrict at least one parameter affecting the driving of the vehicle (10).

7. The method (100) of claim 6, wherein providing (112) instructions to the control unit (24) to restrict at least one parameter affecting the driving of the vehicle (10) comprises providing at least one of the following instruction to the control unit (24):
- restricting (112a) a maximum speed of the vehicle,
- restricting (112b) a maximum torque of the vehicle,
- restricting (112c) a maximum acceleration of the vehicle, and
- modifying (112d) the operation of an electronic stability program of the vehicle.

8. The method (100) of any of claims 1-7, wherein when the determined centre of mass (26) fails to meet the acceptance criterion, the automated action triggered (112, 114) by the computer (30) comprises providing (114) instructions to emit an alert to a user of the vehicle (10).

9. The method (100) of claim 8, wherein providing (114) instructions to emit an alert to a user of the vehicle (10) comprises at least one of the following actions:
- providing (114a) instructions to inform the user that the obtained centre of mass (26) of the vehicle failed to meet the acceptance criterion, and
- providing (114b) instructions to issue a recommendation to the user to modify the maintenance schedule of the vehicle.

10. The method (100) of any of claims 1-9, wherein verifying (108), by the computer (30), if the determined centre of mass (26) meets an acceptance criterion comprises comparing (108) the determined centre of mass (26) with a reference range (44).

11. The method (100) of claim 10, wherein the reference range (44) is determined (104) during the conception of the vehicle (10) on the basis of the design of the vehicle.

12. The method (100) of claim 11, further comprising generating (102) a digital twin (40) of the vehicle (10), the digital twin (40) being stored in the computer (30) and the reference range (44) being determined (104) by analysing the digital twin (40) of the vehicle.

13. The method (100) of any of claims 1-12, wherein the vehicle belongs to a fleet of vehicles, wherein the method further comprises obtaining the centre of mass (26) of each vehicle of the fleet of vehicles and wherein the acceptance criterion is determined on the basis of the centre of mass of each vehicle of the fleet of vehicles.

14. A system (S) comprising a computer (30) and a vehicle (10), the vehicle further comprising a control unit (24) and an air suspension system (16), the air suspension system comprising pressure sensors (18) configured to provide data representative of operating pressures of the air suspension system,
wherein the control unit (24) is configured to determine (106) the centre of mass (26) of the vehicle (10) on the basis of data provided by the pressure sensor (18),
and wherein the computer (30) is configured to:
- verify (108) if the determined centre of mass (26) meets an acceptance criterion,
- when the determined centre of mass (26) fails to meet the acceptance criterion, trigger (112, 114) an automated action,
**characterised in that** the computer (30) is further configured to:
- after a vehicle bodybuilder modification of equipment (28) of the vehicle, further calculate (110) the centre of mass (26) of the vehicle (10), using a computer simulation of the vehicle (10) including the modified equipment (28);
- verify (108) if said calculated centre of mass (26) meets the acceptance criterion; and
- when said calculated centre of mass (26) fails to meet the acceptance criterion, trigger (112, 114) an automated action.

15. The system (S) of claim 14, wherein the vehicle (10) is a heavy-duty vehicle, preferably a truck.

## Patentansprüche

1. Ein Verfahren (100) zur Überwachung eines Fahrzeugs (10), wobei das Fahrzeug eine Steuereinheit (24) und ein Luftfederungssystem (16) umfasst, wobei das Luftfederungssystem Drucksensoren (18) umfasst, die dazu eingerichtet sind, Daten bereitzustellen, die Betriebsdrücke des Luftfederungssystems repräsentieren, wobei das Verfahren (100) umfasst:
- Bestimmen (106) eines Massenschwerpunkts (26) des Fahrzeugs (10) durch die Steuereinheit (24) auf der Grundlage von Daten, die von den Drucksensoren (18) während des Betriebs des Fahrzeugs mindestens einmal bereitgestellt werden,
- Überprüfen (108) durch einen Computer (30), ob der bestimmte Massenschwerpunkt (26) ein Akzeptanzkriterium erfüllt;
- Auslösen (112, 114) einer automatisierten Aktion durch den Computer (30), wenn der bestimmte Massenschwerpunkt (26) das Akzeptanzkriterium nicht erfüllt, **dadurch gekennzeichnet, dass** das Verfahren (100) umfasst
- nach einer Modifikation der Ausrüstung (28) des Fahrzeugs durch einen Fahrzeugaufbauer ferner Berechnen (110) des Massenschwerpunkts (26) des Fahrzeugs (10) durch den Computer (30) unter Verwendung einer Computersimulation des Fahrzeugs (10) einschließlich der modifizierten Ausrüstung (28);
- Überprüfen (108) durch den Computer (30), ob der berechnete Massenschwerpunkt (26) das Akzeptanzkriterium erfüllt; und
- wenn der berechnete Massenschwerpunkt (26) das Akzeptanzkriterium nicht erfüllt, Auslösen (112, 114) einer automatisierten Aktion durch den Computer (30),

2. Das Verfahren (100) nach Patentanspruch 1, wobei das Fahrzeug (10) ferner ein Fahrgestell (12) und Räder (14) umfasst, wobei die Räder durch das Luftfederungssystem (16) am Fahrgestell aufgehängt sind, wobei jeder Drucksensor (18) des Luftfederungssystems einem der Räder zugeordnet ist und wobei die von jedem Drucksensor (18) bereitgestellten Daten, die Betriebsdrücke des Luftfederungssystems repräsentieren, Daten sind, die einen Druck zwischen dem dem jeweiligen Drucksensor zugeordneten Rad und dem Fahrgestell repräsentieren.

3. Das Verfahren (100) nach einem der Patentansprüche 1-2, wobei das Fahrzeug (10) ferner ein Bremssystem (20) umfasst, das Bremsdrucksensoren (22) umfasst, die dazu eingerichtet sind, Daten bereitzustellen, die Bremsdrücke des Bremssystems repräsentieren, und wobei während des Betriebs des Fahrzeugs der bestimmte Massenschwerpunkt (26) des Fahrzeugs (10) zusätzlich zu seiner Bestimmung auf der Grundlage der von den Drucksensoren (18) bereitgestellten Daten durch die Steuereinheit (24) ferner auf der Grundlage von Daten bestimmt (106) wird, die von den Bremsdrucksensoren (22) bereitgestellt werden.

4. Das Verfahren (100) nach einem der Patentansprüche 1-3, wobei die Steuereinheit (24) den Massenschwerpunkt (26) des Fahrzeugs (10) periodisch bestimmt (106) und wobei der Computer (30) periodisch überprüft (108), ob der bestimmte Massenschwerpunkt (26) das Akzeptanzkriterium erfüllt.

5. Das Verfahren (100) nach einem der Patentansprüche 1-4, wobei die Steuereinheit (24) den Massenschwerpunkt (26) des Fahrzeugs (10) bestimmt (106) und der Computer (30) überprüft (108), ob der bestimmte Massenschwerpunkt (26) das Akzeptanzkriterium nach der Modifikation der Ausrüstung (28) des Fahrzeugs durch einen Fahrzeugaufbauer erfüllt.

6. Das Verfahren (100) nach einem der Patentansprüche 1-5, wobei, wenn der bestimmte Massenschwerpunkt
(26) das Akzeptanzkriterium nicht erfüllt, die durch den Computer (30) ausgelöste (112, 114) automatisierte Aktion das Bereitstellen (112) von Weisungen an die Steuereinheit (24) umfasst, um mindestens einen Parameter einzuschränken, der das Fahren des Fahrzeugs (10) beeinflusst.

7. Das Verfahren (100) nach Patentanspruch 6, wobei das Bereitstellen (112) von Weisungen an die Steuereinheit (24), um mindestens einen Parameter einzuschränken, der das Fahren des Fahrzeugs (10) beeinflusst, das Bereitstellen mindestens einer der folgenden Weisungen an die Steuereinheit (24) umfasst:
- Einschränken (112a) einer Höchstgeschwindigkeit des Fahrzeugs,
- Einschränken (112b) eines maximalen Drehmoments des Fahrzeugs,
- Einschränken (112c) einer maximalen Beschleunigung des Fahrzeugs und
- Modifizieren (112d) des Betriebs eines elektronischen Stabilitätsprogramms des Fahrzeugs.

8. Das Verfahren (100) nach einem der Patentansprüche 1-7, wobei, wenn der bestimmte Massenschwerpunkt (26) das Akzeptanzkriterium nicht erfüllt, die durch den Computer (30) ausgelöste (112, 114) automatisierte Aktion das Bereitstellen (114) von Weisungen umfasst, um eine Warnung an einen Benutzer des Fahrzeugs (10) auszugeben.

9. Das Verfahren (100) nach Patentanspruch 8, wobei das Bereitstellen (114) von Weisungen, um eine Warnung an einen Benutzer des Fahrzeugs (10) auszugeben, mindestens eine der folgenden Handlungen umfasst:
- Bereitstellen (114a) von Weisungen, um den Benutzer darüber zu informieren, dass der ermittelte Massenschwerpunkt (26) des Fahrzeugs das Akzeptanzkriterium nicht erfüllt hat, und
- Bereitstellen (114b) von Weisungen, um dem Benutzer eine Empfehlung zur Änderung des Wartungsplans des Fahrzeugs zu geben.

10. Das Verfahren (100) nach einem der Patentansprüche 1-9, wobei das Überprüfen (108) durch den Computer (30), ob der bestimmte Massenschwerpunkt (26) ein Akzeptanzkriterium erfüllt, das Vergleichen (108) des bestimmten Massenschwerpunkts (26) mit einem Referenzbereich (44) umfasst.

11. Das Verfahren (100) nach Patentanspruch 10, wobei der Referenzbereich (44) während der Konzeption des Fahrzeugs (10) auf der Grundlage der Konstruktion des Fahrzeugs bestimmt (104) wird.

12. Das Verfahren (100) nach Patentanspruch 11, ferner umfassend das Erzeugen (102) eines digitalen Zwillings (40) des Fahrzeugs (10), wobei der digitale Zwilling (40) in dem Computer (30) gespeichert ist und der Referenzbereich (44) durch Analysieren des digitalen Zwillings (40) des Fahrzeugs bestimmt (104) wird.

13. Das Verfahren (100) nach einem der Patentansprüche 1-12, wobei das Fahrzeug zu einer Flotte von Fahrzeugen gehört, wobei das Verfahren ferner das Ermitteln des Massenschwerpunkts (26) jedes Fahrzeugs der Flotte von Fahrzeugen umfasst und wobei das Akzeptanzkriterium auf Grundlage des Massenschwerpunkts jedes Fahrzeugs der Flotte von Fahrzeugen bestimmt wird.

14. Ein System (S), umfassend einen Computer (30) und ein Fahrzeug (10), wobei das Fahrzeug ferner eine Steuereinheit (24) und ein Luftfederungssystem (16) umfasst, wobei das Luftfederungssystem Drucksensoren (18) umfasst, die dazu konfiguriert sind, Daten bereitzustellen, die für Betriebsdrücke des Luftfederungssystems repräsentativ sind,
wobei die Steuereinheit (24) dazu konfiguriert ist, den Massenschwerpunkt (26) des Fahrzeugs (10) auf Grundlage von durch den Drucksensor (18) bereitgestellten Daten zu bestimmen (106),
und wobei der Computer (30) dazu konfiguriert ist:
- zu überprüfen (108), ob der bestimmte Massenschwerpunkt (26) ein Akzeptanzkriterium erfüllt,
- wenn der bestimmte Massenschwerpunkt (26) das Akzeptanzkriterium nicht erfüllt, eine automatisierte Aktion auszulösen (112, 114), **dadurch gekennzeichnet, dass** der Computer (30) ferner dazu konfiguriert ist:
- nach einer durch einen Fahrzeugaufbauer vorgenommenen Modifikation der Ausrüstung (28) des Fahrzeugs den Massenschwerpunkt (26) des Fahrzeugs (10) ferner zu berechnen (110), unter Verwendung einer Computersimulation des Fahrzeugs (10) einschließlich der modifizierten Ausrüstung (28);
- zu überprüfen (108), ob der berechnete Massenschwerpunkt (26) das Akzeptanzkriterium erfüllt; und
- wenn der berechnete Massenschwerpunkt (26) das Akzeptanzkriterium nicht erfüllt, eine automatisierte Aktion auszulösen (112, 114).

15. Das System (S) nach Patentanspruch 14, wobei das Fahrzeug (10) ein Schwerlastfahrzeug, vorzugsweise ein Lastkraftwagen, ist.

## Revendications

1. Un procédé (100) pour surveiller un véhicule (10), le véhicule comprenant une unité de commande (24) et un système de suspension pneumatique (16), le système de suspension pneumatique comprenant des capteurs de pression (18) configurés pour fournir des données représentatives de pressions de fonctionnement du système de suspension pneumatique, dans lequel le procédé (100) comprend :
- déterminer (106) un centre de masse (26) du véhicule (10) par l'unité de commande (24) sur la base des données fournies par les capteurs de pression (18) au moins une fois pendant le fonctionnement du véhicule,
- vérifier (108), par un ordinateur (30), si le centre de masse (26) déterminé satisfait à un critère d'acceptation ;
- déclencher (112, 114) une action automatisée, par l'ordinateur (30), lorsque le centre de masse déterminé (26) ne satisfait pas au critère d'acceptation, **caractérisé en ce que** le procédé (100) comprend
- après une modification par un carrossier d'un équipement (28) du véhicule, calculer en outre (110), par l'ordinateur (30), le centre de masse (26) du véhicule (10), en utilisant une simulation informatique du véhicule (10) incluant l'équipement (28) modifié ;
- vérifier (108), par l'ordinateur (30), si ledit centre de masse (26) calculé satisfait au critère d'acceptation ; et
- lorsque ledit centre de masse (26) calculé ne satisfait pas au critère d'acceptation, déclencher (112, 114), par l'ordinateur (30), une action automatisée,

2. Le procédé (100) de la revendication 1, dans lequel le véhicule (10) comprend en outre un châssis (12) et des roues (14), les roues étant suspendues au châssis par le système de suspension pneumatique (16), dans lequel chaque capteur de pression (18) du système de suspension pneumatique est associé à l'une des roues et dans lequel les données représentatives de pressions de fonctionnement du système de suspension pneumatique fournies par chaque capteur de pression (18) sont des données représentatives d'une pression entre la roue associée audit capteur de pression et le châssis.

3. Le procédé (100) selon l'une quelconque des revendications 1-2, dans lequel le véhicule (10) comprend en outre un système de freinage (20) comprenant des capteurs de pression de freinage (22) configurés pour fournir des données représentatives de pressions de freinage du système de freinage et dans lequel, pendant le fonctionnement du véhicule, en plus d'être déterminé sur la base des données fournies par les capteurs de pression (18), le centre de masse (26) déterminé du véhicule (10) est en outre déterminé (106) par l'unité de commande (24) sur la base des données fournies par les capteurs de pression de freinage (22).

4. Le procédé (100) selon l'une quelconque des revendications 1-3, dans lequel l'unité de commande (24) détermine périodiquement (106) le centre de masse (26) du véhicule (10) et dans lequel l'ordinateur (30) vérifie périodiquement (108) si le centre de masse (26) déterminé satisfait au critère d'acceptation.

5. Le procédé (100) selon l'une quelconque des revendications 1-4, dans lequel l'unité de commande (24) détermine (106) le centre de masse (26) du véhicule (10) et l'ordinateur (30) vérifie (108) si le centre de masse (26) déterminé satisfait au critère d'acceptation après la modification par un carrossier d'un équipement (28) du véhicule.

6. Le procédé (100) selon l'une quelconque des revendications 1-5, dans lequel, lorsque le centre de masse déterminé (26) ne satisfait pas au critère d'acceptation, l'action automatisée déclenchée (112, 114) par l'ordinateur (30) comprend la fourniture (112) d'instructions à l'unité de commande (24) pour restreindre au moins un paramètre affectant la conduite du véhicule (10).

7. Le procédé (100) de la revendication 6, dans lequel la fourniture (112) d'instructions à l'unité de commande (24) pour restreindre au moins un paramètre affectant la conduite du véhicule (10) comprend la fourniture d'au moins l'une des instructions suivantes à l'unité de commande (24) :
- restreindre (112a) une vitesse maximale du véhicule,
- restreindre (112b) un couple maximal du véhicule,
- restreindre (112c) une accélération maximale du véhicule, et
- modifier (112d) le fonctionnement d'un programme électronique de stabilité du véhicule.

8. Le procédé (100) selon l'une quelconque des revendications 1-7, dans lequel, lorsque le centre de masse déterminé (26) ne satisfait pas au critère d'acceptation, l'action automatisée déclenchée (112, 114) par l'ordinateur (30) comprend la fourniture (114) d'instructions pour émettre une alerte à un utilisateur du véhicule (10).

9. Le procédé (100) de la revendication 8, dans lequel la fourniture (114) d'instructions pour émettre une alerte à un utilisateur du véhicule (10) comprend au moins l'une des actions suivantes :
- fournir (114a) des instructions pour informer l'utilisateur que le centre de masse (26) obtenu du véhicule n'a pas satisfait au critère d'acceptation, et
- fournir (114b) des instructions pour émettre une recommandation à l'utilisateur de modifier le calendrier d'entretien du véhicule.

10. Le procédé (100) selon l'une quelconque des revendications 1-9, dans lequel la vérification (108), par l'ordinateur (30), du fait que le centre de masse (26) déterminé satisfait à un critère d'acceptation comprend la comparaison (108) du centre de masse (26) -déterminé avec une plage de référence (44).

11. Le procédé (100) de la revendication 10, dans lequel la plage de référence (44) est déterminée (104) pendant la conception du véhicule (10) sur la base de la conception du véhicule.

12. Le procédé (100) de la revendication 11, comprenant en outre la génération (102) d'un jumeau numérique (40) du véhicule (10), le jumeau numérique (40) étant stocké dans l'ordinateur (30) et la plage de référence (44) étant déterminée (104) par analyse du jumeau numérique (40) du véhicule.

13. Le procédé (100) selon l'une quelconque des revendications 1-12, dans lequel le véhicule appartient à une flotte de véhicules, dans lequel le procédé comprend en outre l'obtention du centre de masse (26) de chaque véhicule de la flotte de véhicules et dans lequel le critère d'acceptation est déterminé sur la base du centre de masse de chaque véhicule de la flotte de véhicules.

14. Un système (S) comprenant un ordinateur (30) et un véhicule (10), le véhicule comprenant en outre une unité de commande (24) et un système de suspension pneumatique (16), le système de suspension pneumatique comprenant des capteurs de pression (18) configurés pour fournir des données représentatives des pressions de fonctionnement du système de suspension pneumatique,
dans lequel l'unité de commande (24) est configurée pour déterminer (106) le centre de masse (26) du véhicule (10) sur la base des données fournies par le capteur de pression (18),
et dans lequel l'ordinateur (30) est configuré pour :
- vérifier (108) si le centre de masse déterminé (26) satisfait à un critère d'acceptation,
- lorsque le centre de masse déterminé (26) ne satisfait pas au critère d'acceptation, déclencher (112, 114) une action automatisée, **caractérisé en ce que** l'ordinateur (30) est en outre configuré pour :
- après une modification de l'équipement (28) du véhicule par un carrossier de véhicules, calculer en outre (110) le centre de masse (26) du véhicule (10), à l'aide d'une simulation informatique du véhicule (10) incluant l'équipement modifié (28) ;
- vérifier (108) si ledit centre de masse calculé (26) satisfait au critère d'acceptation ; et
- lorsque ledit centre de masse calculé (26) ne satisfait pas au critère d'acceptation, déclencher (112, 114) une action automatisée.

15. Le système (S) de la revendication 14, dans lequel le véhicule (10) est un véhicule lourd, de préférence un camion.
